Europäisches Patentamt

European Patent Office

Office européen des brevets

(11) Veröffentlichungsnummer: **0 156 201**
**B1**

(12) **EUROPÄISCHE PATENTSCHRIFT**

(45) Veröffentlichungstag der Patentschrift:
09.12.87

(51) Int. Cl.⁴: **F 16 D 35/00**, F 16 H 1/455

(21) Anmeldenummer: **85102465.3**

(22) Anmeldetag: **05.03.85**

(54) **Flüssigkeitsreibungskupplung, insbesondere für Ausgleichsgetriebe von Kraftfahrzeugen.**

(30) Priorität: **12.03.84 DE 3408976**

(43) Veröffentlichungstag der Anmeldung:
**02.10.85 Patentblatt 85/40**

(45) Bekanntmachung des Hinweises auf die Patenterteilung:
**09.12.87 Patentblatt 87/50**

(84) Benannte Vertragsstaaten:
**DE FR GB IT SE**

(56) Entgegenhaltungen:
**DE - A - 2 209 879**
**GB - A - 171 176**
**GB - A - 1 491 203**
**US - A - 3 038 576**
**US - A - 4 058 027**

(73) Patentinhaber: **BAYERISCHE MOTOREN WERKE Aktiengesellschaft, Postfach 40 02 40 Petueiring 130 - AJ-36, D-8000 München 40 (DE)**

(72) Erfinder: **Martin, Harry, Dipl.-Ing., Wettersteinstrasse 20, D-8027 Neuried (DE)**

(74) Vertreter: **Dexheimer, Rolf, Bayerische Motoren Werke Aktiengesellschaft Postfach 40 02 40 Petueiring 130 - AJ-31, D-8000 München 40 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

Beschreibung

Die Erfindung bezieht sich auf eine Flüssigkeitsreibungskupplung, insbesondere für Ausgleichsgetriebe von Kraftfahrzeugen nach dem Oberbegriff des Hauptanspruchs.

Solche Flüssigkeitsreibungskupplungen sind in der Lage, Drehmomente zu übertragen, sobald die Lamellensätze sich gegeneinander verdrehen. Der Grund hierfür liegt in der inneren Reibung des zähflüssigen Mediums. Je höher die Relativdrehzahl der Lamellenpakete ist, desto grössere Momente lassen sich übertragen. Das übertragbare Moment verhält sich aber auch reziprok zu dem Lamellenabstand, also es steigt mit kleiner werdendem Abstand.

Durch diese Eigenschaften eignen sich Flüssigkeitsreibungskupplungen auch als Differentialsperren in Ausgleichsgetrieben von Kraftfahrzeugen. Der eine Lamellensatz ist dabei antriebsmässig mit dem einen Abtriebszahnrad verbunden, während der andere Lamellensatz entweder in Antriebsverbindung mit dem Ausgleichskorb oder mit dem zweiten Abtriebszahnrad steht. Dabei werden in diesem Zusammenhang sowohl Ausgleichsgetriebe verstanden, die zwischen den beiden Halbachsen einer Antriebsachse — also sog. Achsdifferentiale — eingebaut sind, als auch solche, die zwischen zwei Antriebsachsen — kombiniert mit einem Verteilergetriebe — eines Vierradantriebes vorgesehen sind. Die Flüssigkeitskupplungen werden entweder in dem Aufbau des Ausgleichsgetriebes integriert oder als getrenntes Aggregat mit dem Ausgleichsgetriebe kombiniert.

Eine bekannte Flüssigkeitsreibungskupplung für die Anwendung in einem Kraftfahrzeug zeigt die US-A-4 058 027. Hier sind im eigentlichen Sinne zwei Flüssigkeitskupplungen vorgesehen, die durch einen Ringkolben voneinander getrennt sind. Eine der Kupplungen wirkt ab einem bestimmten Betriebszustand auch noch als herkömmliche Reibungskupplung. Drehen bei dieser Anordnung die Antriebsräder unterschiedlich schnell, so bewirkt dies im Ausgleichsgetriebe das erwähnte Verdrehen der Lamellensätze. Durch die innere Reibung des zähflüssigen Mediums führt dieses Verdrehen zu einem Temperaturanstieg, der wiederum einen Druckanstieg in der Ringkammer bewirkt. Dabei steigt die Temperatur umso schneller an, je höher die Differenzdrehzahl zwischen den Lamellensätzen wird. Der ansteigende Druck bewegt den Ringkolben in axialer Richtung, der dadurch die Kupplungslamellen zusammenschiebt. Die Flüssigkeitsreibungskupplung kann so ein immer grösseres Drehmoment übertragen, was sich in Wirklichkeit als ein immer stärkeres Sperren des Ausgleichsgetriebes auswirkt. Bei der bekannten Ausführung wird demnach über den Temperaturanstieg in der Ringkammer das Ausgleichsgetriebe in Abhängigkeit der Differenzdrehzahl allmählich gesperrt.

Erhöhte Temperatur kann jedoch schädlich für das zähflüssige Medium sein. Es kann mit der Zeit die ihm innewohnenden Eigenschaften verlieren, die für das einwandfreie Arbeiten der Flüssigkeitsreibungskupplung notwendig sind.

Eine weitere Flüssigkeitsreibungskupplung lässt sich aus der DE-A-2 209 879 entnehmen. Die Veränderung des Lamellenabstandes bewirkt bei dieser Ausführung eine Stellscheibe, die als Umlaufkörper keine echte Antriebsverbindung besitzt. Solange jedoch keine Drehzahldifferenz auftritt, läuft sie mit der Drehzahl des Innenkörpers um. Die Stellscheibe weist an ihrer einen Seite Nockenflächen auf, in denen Walzen angeordnet sind. Tritt eine Drehzahldifferenz auf, bleibt die Stellscheibe wegen den Scherkräften in der Viskoseflüssigkeit gegenüber dem Innenkörper zurück und die Walzen rollen an den Nockenflächen ab. Dies wiederum bewirkt die axiale Verlagerung eines Schaltringes, der über weitere Glieder die Kupplungslamellen zusammenschiebt. Der Aufbau dieser Flüssigkeitsreibungskupplung ist verhältnismässig aufwendig.

Aufgabe der Erfindung ist es, eine gattungsgemässe Flüssigkeitsreibungskupplung so auszulegen, dass die Lamellenabstände auf andere Weise als durch die auftretende Wärme verstellt werden, und dass sie einfach in ihrem Aufbau ist.

Die Aufgabe wird erfindungsgemäss mit den kennzeichnenden Merkmalen des Hauptanspruchs gelöst. Weitere vorteilhafte Ausgestaltungen ergeben sich aus den Unteransprüchen.

Bei der erfindungsgemässen Flüssigkeitsreibungskupplung nimmt die Stellscheibe die Veränderung des Lamellenabstandes vor. Auf sie wirken die Scherkräfte, die sich bei drehenden Lamellensätzen zwischen ihr und der benachbarten Kupplungsscheibe aufbauen. Diese Scherkräfte versuchen die Stellscheibe zu drehen. Da sie aber an einem Aufstellglied gelagert ist, werden die Kräfte dort eingeleitet mit dem Effekt, dass das Aufstellglied ausschwenkt und die Stellscheibe in Richtung ihrer benachbarten Kupplungsscheibe drückt. Bedingt durch die in der Flüssigkeitsreibungskupplung vorhandene Eigenjustierung der Kupplungslamellen verringern sich dadurch die Abstände sämtlicher Kupplungsscheiben gleichmässig.

Die sich aufbauenden Scherkräfte hängen ebenfalls mit der inneren Reibung des zähflüssigen Mediums zusammen. Es wird demnach auch hier die Temperatur ansteigen. Da jedoch die steigende Temperatur nicht zur Verstellung der Lamellen herangezogen wird, lässt sich der Anstieg durch Auswahl des zähflüssigen Mediums und der Dimensionierung der Flüssigkeitsreibungskupplung so begrenzen, dass keine Gefahr besteht für das zähflüssige Medium.

Welcher Antriebsverbindung die Aufstellglieder zugeordnet sind, bleibt für die Funktion der erfindungsgemässen Kupplung unerheblich. Jedoch darf es nicht mit dem gleichen Antrieb verbunden sein wie die der Stellscheibe benachbarte Kupplungslamelle.

Ausserdem ist darauf zu achten, dass die Aufstellglieder in ihrer Ruhelage immer etwas in Richtung zur Stellscheibe zeigen. Nur so können die an der Stellscheibe auftretenden Kräfte zu einer axialen Kraftkomponente führen.

Da die Lamellensätze in beide Richtungen drehen können, ist es erforderlich, für jeden Drehsinn ein Aufstellglied vorzusehen. Weiter kann es zweckmässig sein, mehrere am Umfang verteilte Aufstellglieder anzubringen. Um eine besonders kompakte Bauweise zu erhalten, ist es ferner vorteilhaft, das Aufstellglied an den Radialwänden der Ringkammer anzuordnen.

Nachfolgend werden mehrere Ausführungsbeispiele der Erfindung beschrieben und in der Zeichnung dargestellt. Es zeigen

Fig. 1 abschnittweise und im Schnitt eine erfindungsgemässe Flüssigkeitsreibungskupplung;

Fig. 2 eine Ausführung mit zwei Schwenkhebeln, die über eine Feder miteinander verbunden sind;

Fig. 3 eine ähnliche Ausführung wie in Fig. 2, jedoch mit gleitenden Schwenkhebeln;

Fig. 4 ein weiteres Ausführungsbeispiel, bei dem die Schwenkhebel durch angestellte Federzungen gebildet sind und

Fig. 5 ein weiteres Ausführungsbeispiel mit einem Schwenkhebel mit zwei starr miteinander verbundenen Armen.

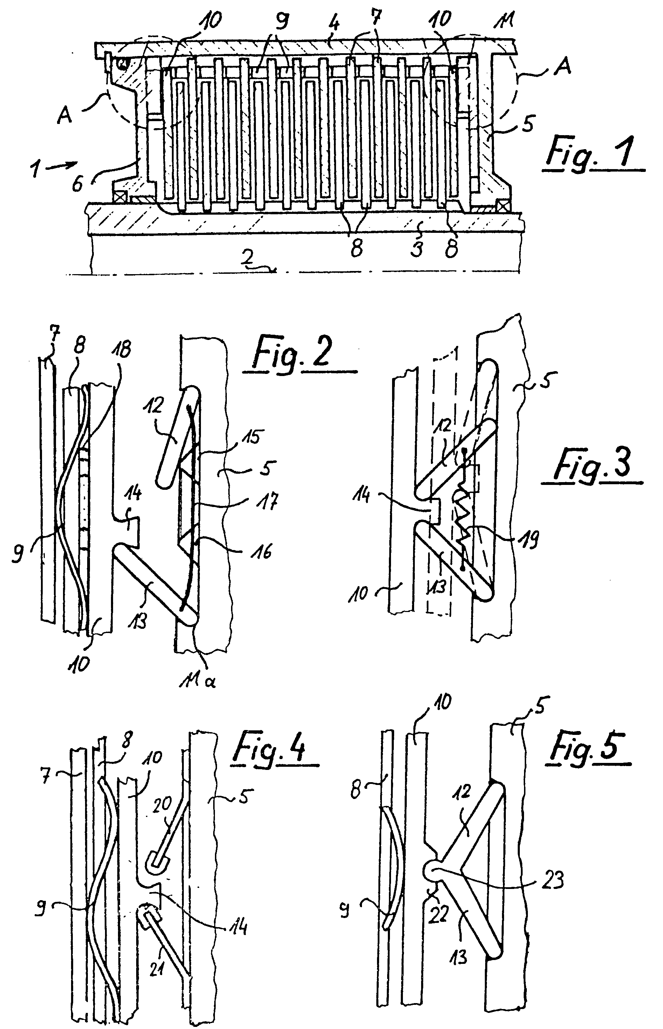

In Fig. 1 ist in geschnittener Darstellung lediglich der sich an die Kupplungsachse 2 anschliessende obere Abschnitt einer Flüssigkeitsreibungskupplung 1 gezeichnet. Der untere Abschnitt wurde der Einfachheit halber weggelassen. Die Flüssigkeitsreibungskupplung 1 lässt sich für ein Ausgleichsgetriebe eines Kraftfahrzeuges verwenden. Sie ist aber nicht auf den Kraftfahrzeugsektor beschränkt; sie lässt sich ganz allgemein in der Antriebstechnik verwenden. Sie weist eine geschlossene Ringkammer auf, die gebildet ist aus einem zylindrischen Innenkörper 3 und einem darüber koaxial angeordneten und verdrehbar gehaltenen trommelförmigen Aussenkörper 4. Zwischen dem Innenkörper 3 und dem Aussenkörper 4 sind Radialwände 5 und 6 vorgesehen. Die Radialwand 5 ist dabei einstückig mit dem Aussenkörper 4 verbunden, während die Radialwand 6 getrennt von diesen beiden Körpern ausgeführt ist. Sie steht aber in Antriebsverbindung mit dem Aussenkörper 4.

Die Ringkammer ist nach aussen abgedichtet und enthält ein zähflüssiges Medium, das beispielsweise aus einem Silikonöl bestehen kann. Dabei ist die Ringkammer nahezu vollständig mit diesem Medium gefüllt.

Weiter enthält die Ringkammer zwei ineinandergreifende Lamellensätze mit ringförmigen Kupplungslamellen 7 und 8. Die Kupplungslamellen 7 und 8 lassen sich um die Kupplungsachse 2 verdrehen. Der Vollständigkeit halber sei erwähnt, dass die Kupplungsachse sich zugleich als die gemeinsame Drehachse des Innenkörpers 3 und Aussenkörpers 4 darstellt. Die Kupplungslamellen 7, 8 sind abwechselnd aufeinanderfolgend und mit Abstand zueinander angeordnet. Ihr Abstand wird durch Distanzfedern 9 bestimmt, die sich zwischen den einzelnen Kupplungslamellen 7 befinden. Die Kupplungslamellen 7 stehen über eine Keilverzahnung mit dem Aussenkörper 4 in Antriebsverbindung, während die Kupplungslamellen 8 über eine entsprechende Verzahnung mit dem Innenkörper 3 antriebsmässig verbunden sind.

Die Ringkammer enthält in der Nähe ihrer Radialwände 5 und 6 jeweils eine ringförmige Stellscheibe 10. Die Stellscheiben 10 lassen sich um die Kupplungsachse 2 drehen und haben dabei keine antriebsmässige Verbindung zu dem Innenkörper 3. Sie sind jedoch im Bereich der in Fig. 1 mit «A» bezeichneten Kreise über nicht erkennbare Schwenkhebel mit dem Aussenkörper 4 verbunden.

Die Fig. 2 bis 4 zeigen in vergrössertem Massstab die Schwenkhebel 12 und 13. Dabei ist eine Ansicht von oben auf Fig. 1 gewählt, der Zylindermantel des Aussenkörpers 4 jedoch entfernt. Die Schwenkhebel sind an beiden Radialwänden 5, 6 gleich ausgeführt, lediglich an der Radialwand 5 ist noch ein Bauteil 11 befestigt, das als Träger für die Schwenkhebel dient. Die Fig. 2 bis 4 nehmen Bezug auf die Radialwand 5. Hier soll allerdings das Bauteil 11 einstückig mit dieser Wand ausgeführt sein.

Fig. 2 lässt wieder die Radialwand 5 erkennen, in der zwei Schwenkhebel 12 und 13 gelagert sind. Ebenfalls sind die Stellscheibe 10 und die Kupplungslamellen 7 und 8 erkennbar. Eine der Distanzfedern 9 stützt sich einmal an der Kupplungslamelle 7 ab und drückt andererseits auf die Stellscheibe 10. Insgesamt zeigt die Fig. 2, wie auch die Fig. 3 und 4, den Zustand, bei dem die Stellscheibe 10 bereits in Richtung Kupplungslamelle 8 verschoben ist.

Die Stellscheibe 10 weist einen in Richtung der Kupplungsachse 2 sich erstreckenden und der Radialwand 5 zugekehrten Zapfen 14 auf mit einer als Hinterschneidung dienenden Einschnürung. In diese Hinterschneidung greift der Schwenkhebel 13 mit seinem einen Ende ein, während sein anderes Ende sich an einem Lagersitz 11a der Radialwand 5 abstützt. Der Schwenkhebel 12 ruht auf einem Höcker 15 der Radialwand 5. Ein ähnlicher Höcker 16 ist für den Schwenkhebel 13 vorgesehen. Eine Feder 17 verbindet die beiden Schwenkhebel 12 und 13.

Die Verstellvorrichtung arbeitet folgendermassen: In der Ruhestellung, also wenn die Lamellensätze sich nicht gegenseitig verdrehen, befindet sich die Stellscheibe 10 in der Nähe der Radialwand 5. Sie wird in dieser Lage durch die Distanzfeder 9 gehalten. Verdrehen sich nun die Lamellensätze gegeneinander, baut sich eine Scherkraft zwischen der Kupplungslamelle 8 und der Stellscheibe 10 auf. Die Scherkräfte sind in Fig. 2 durch symbolische Doppelpfeile 18 angedeutet. Die Scherkräfte versuchen die Stellscheibe in Richtung der Kupplungslamelle 8 mitzudrehen. Dies verhindert jedoch der Schwenkhebel 13, der schon von Anfang an den Zapfen 14 hintergreift. Durch die daraus resultierende Kraftzerlegung ergibt sich eine Komponente in Axialrichtung, aufgrund derer die Stellscheibe 10 in Richtung der Kupplungsscheibe 8 auswandert. Der Schwenkhebel 13 schwenkt dabei mit, während der Schwenkhebel 12 in seiner Ruhelage verbleibt. Bei umgekehrtem Drehsinn wird der Schwenkhebel 12 in entsprechender Weise tätig.

Die Ausführung nach Fig. 3 unterscheidet sich von der nach Fig. 2 dadurch, dass beide Schwenkhebel 12, 13 bei jedem Betriebszustand den Zapfen 14 der Stellscheibe 10 hintergreifen. Zu diesem Zweck weist die Radialwand 5 eine Nut auf, in der der gerade nicht abstützende Schwenkhebel gleiten kann. Eine Feder 19 verbindet wiederum die beiden Schwenkhebel 12, 13. Die Fig. 3 zeigt ausserdem noch in gestrichelten Linien die Ausgangsstellung der Stellscheibe 10. Es lassen sich in dieser Stellung auch die leicht in Richtung der Stellscheibe 10 hingewendeten Schwenkhebel 12, 13 erkennen.

In Fig. 4 sind die Schwenkhebel als Federzungen 20, 21 ausgeführt. In ihrer Ruhestellung sind sie ebenfalls etwas in Richtung der Stellscheibe 10 gebogen. Ansonsten ähnelt die Ausführung nach Fig. 4 der nach Fig. 2.

Bei dem Ausführungsbeispiel nach Fig. 5 sind die Schwenkhebel 12, 13 zu einem einheitlichen Bauteil zusammengefasst. Das Bauteil greift mit einem kugeligen Abschnitt 23 in einen Lagersitz 22 der Stellscheibe 10. Die Funktionsweise dieses Ausführungsbeispiels ähnelt der nach Fig. 3.

Es sei noch darauf hingewiesen, dass die Ausführungen, soweit es zweckmässig ist, miteinander kombiniert werden können. Auch müssen die Schwenkhebel nicht notwendigerweise dem Aussenkörper 4 zugeordnet sein. Bei einer Umkehrung der Verhältnisse können sie ebensogut antriebsmässig mit dem Innenkörper 3 verbunden sein. Jedoch muss es sich in diesem Fall bei der Kupplungslamelle, die der Stellscheibe 10 benachbart angeordnet ist, um eine solche handeln, die mit dem Aussenkörper 4 in Antriebsverbindung steht. Auch können mehrere Schwenkhebel für einen Drehsinn in Umfangsrichtung vorgesehen sein.

**Patentansprüche**

1. Flüssigkeitsreibungskupplung, insbesondere für Ausgleichsgetriebe von Kraftfahrzeugen, bei der eine geschlossene, mit zähflüssigem Medium gefüllte Ringkammer gebildet ist aus einem zylindrischen Innenkörper (3), einem dazu koaxial angeordneten und verdrehbaren, trommelförmigen Aussenkörper (4) und aus Radialwänden (5, 6) zwischen Innen- und Aussenkörper und bei der die Ringkammer ineinandergreifende Lamellensätze enthält mit um die gemeinsame Achse von Innen- und Aussenkörper drehbaren ringförmigen Kupplungslamellen (7, 8) die abwechselnd aufeinanderfolgend und mit Abstand zueinander angeordnet sind, während die Kupplungslamellen (8) eines Lamellensatzes mit dem Innenkörper (3) und die des anderen Lamellensatzes mit dem Aussenkörper (4) in Antriebsverbindung stehen, und die eine auf den Lamellenabstand wirkende, als Umlaufkörper ausgebildete, ringförmige Stellscheibe (10) enthält, dadurch gekennzeichnet, dass die Stellscheibe (10) einer Kupplungslamelle (8) der einen Antriebsverbindung mit parallelem Abstand gegenüberliegt und einen Zapfen (14) vorsieht, der sich in Achsrichtung der Kupplung erstreckt und auf eine der anderen Antriebsverbindung zugeordneten Radialwand (5) zeigt, wobei der Zapfen (14) Hinterschneidungen aufweist, in die zwei an der Radialwand (5) abgestützte als Aufstellglieder wirkende Schwenkhebel (12, 13, 20, 21) eingreifen.

2. Kupplung nach Anspruch 1, dadurch gekennzeichnet, dass jedem Drehsinn der Stellscheibe (10) ein Schwenkhebel (12, 13, 20, 21) zugeordnet ist.

3. Kupplung nach Anspruch 1 oder 2, dadurch gekennzeichnet, dass die Schwenkhebel (12, 13, 20, 21) durch Federkraft in ihrer Ausgangsstellung gehalten werden.

4. Kupplung nach einem der Ansprüche 1 bis 3, dadurch gekennzeichnet, dass die Schwenkhebel als an der Radialwand (5) vorgesehene und zu der Stellscheibe (10) hin gebogene Federzungen (20, 21) ausgebildet sind.

5. Kupplung nach einem der Ansprüche 1 bis 3, dadurch gekennzeichnet, dass die Schwenkhebel (12, 13) durch an der Radialwand (5, 6) vorgesehene Höcker (15, 16) in ihrer Ausgangslage zu der Stellscheibe (10) hin angestellt sind.

6. Kupplung nach einem der Ansprüche 1 bis 3, dadurch gekennzeichnet, dass die Schwenkhebel (12, 13) mit ihren der Radialwand (5) zugewandten Enden in einer Gleitbahn der Radialwand (5) beweglich angeordnet sind.

7. Kupplung nach Anspruch 2, 5 oder 6, dadurch gekennzeichnet, dass die Schwenkhebel (12, 13) über eine Feder (17, 19) miteinander verbunden sind.

**Claims**

1. A fluid friction clutch, especially for differential gears of motor vehicles, wherein a closed annular chamber filled with a viscous medium is formed by a cylindrical inner body (3), a co-axial outer body (4) of drum form arranged to be rotatable therewith, and by radial walls (5, 6) between the inner and outer bodies, and wherein the annular chamber contains inter-engaging plate sets comprising annular clutch plates (7, 8) rotatable about the common axis of the inner and outer bodies and arranged in alternating sequence with spacing from one another, the clutch plates (8) of one plate set being in drive connection with the inner body (3) and those of the other plate set being in drive connection with the outer body (4), and the chamber containing an annular setting disc (10) formed as a rotating body and arranged to act on the distance between plates, characterised in that the setting disc (10) lies opposite to a clutch plate (8) of the one drive connection with parallel spacing between the two and is provided with a journal (14) which extends in the axial direction of the clutch towards a radial wall (5) associated with the other drive connection, the journal (14) having relieved portions in which there engage two pivot levers (12, 13, 20, 21) supported on the radial wall (5) and acting as positioning members.

2. A clutch according to Claim 1, characterised in that there is a respective pivot lever (12, 13, 20, 21) for each direction of rotation of the setting disc (10).

3. A clutch according to Claim 1 or 2, characterised in that the pivot levers (12, 13, 20, 21) are held in their initial position by spring force.

4. A clutch according to any one of Claims 1 to 3, characterised in that the pivot levers are formed as spring tongues (20, 21) provided on the radial wall (5) and bent towards the setting disc (10).

5. A clutch according to any one of Claims 1 to 3, characterised in that the pivot levers (12, 13) are directed towards the setting disc (10) in their initial position by protuberances (15, 16) provided on the radial wall (5, 6).

6. A clutch according to any one of Claims 1 to 3, characterised in that the ends of the pivot levers (12, 13) facing the radial wall (5) are movable in a slideway of the radial wall (5).

7. A clutch according to Claim 2, 5 or 6, characterised in that the pivot levers (12, 13) are connected with one another through a spring (17, 19).

## Revendications

1. Accouplement à cisaillement de fluide, notamment pour les boîtes à différentiel pour automobiles, dans lequel une chambre à bague, fermée et remplie d'un milieu visqueux, est formée d'un corps intérieur (3) cylindrique, d'un corps extérieur (4) disposé de façon coaxiale, en forme de tambour et pouvant tourner, et de parois radiales (5, 6) entre les corps intérieur et extérieur, et dans lequel la chambre à bague contient des jeux de lamelles pénétrant l'un dans l'autre avec, autour de l'axe commun des corps intérieur et extérieur, des lamelles d'accouplement (7, 8) tournantes en forme de bague, qui se suivent alternativement de façon consécutive et à une distance déterminée de l'une à l'autre, les lamelles d'accouplement (8) d'un jeu de lamelles étant liées par entraînement avec le corps intérieur (3), et les lamelles de l'autre jeu de lamelles étant liées par entraînement avec le corps extérieur (4), ledit accouplement comportant un disque de blocage (10) tournant, en forme de bague et agissant sur la distance entre lamelles, caractérisé en ce que le disque de réglage (10) est situé en face d'une lamelle d'accouplement (8), parallèlement, à une certaine distance et en liaison d'entraînement, et présente un tenon (14) qui s'étend en direction de l'axe de l'accouplement et vers la paroi radiale (5) reliée à l'autre entraînement, grâce à quoi le tenon (14) présente des renfoncements, dans lesquels viennent en contact deux leviers d'articulation (12, 13, 20, 21) fixés dans la paroi radiale (5) et agissant comme segments de positionnement.

2. Accouplement selon la revendication 1, caractérisé en ce qu'à chaque sens de rotation du disque de réglage (10) est associé un levier d'articulation (12, 13, 20, 21).

3. Accouplement selon l'une quelconque des revendications 1 ou 2, caractérisé en ce que les leviers d'articulation (12, 13, 20, 21) sont maintenus dans leur position de sortie par une force de ressort.

4. Accouplement selon l'une quelconque des revendications 1 à 3, caractérisé en ce que les leviers d'articulation sont formés en lames de ressort (20, 21) prévues dans la paroi radiale (5) et courbées en direction du disque de réglage (10).

5. Accouplement selon l'une quelconque des revendications 1 à 3, caractérisé en ce que les leviers d'articulation (12, 13) sont posés sur des protubérances (15, 16) prévues dans les parois radiales (5, 6), dans leur position de sortie vis-à-vis du disque de réglage (10).

6. Accouplement selon l'une quelconque des revendications 1 à 3, caractérisé en ce que les leviers d'articulation (12, 13) sont disposés de façon mobile avec leurs extrémités du côté de la paroi radiale (5) situées dans une rainure de coulissement dans la paroi radiale (5).

7. Accouplement selon l'une quelconque des revendications 2, 5 ou 6, caractérisé en ce que les leviers d'articulation (12, 13) sont maintenus ensemble par un ressort (17, 19).

Fig. 1

Fig. 2

Fig. 3

Fig. 4

Fig. 5